(19) Europäisches Patentamt
European Patent Office
Office européen des brevets

(11) Numéro de publication : **0 108 006**
**B1**

(12) # FASCICULE DE BREVET EUROPÉEN

(45) Date de publication du fascicule du brevet : **21.01.87**

(51) Int. Cl.[4] : **C 08 L 27/16**

(21) Numéro de dépôt : **83402030.7**

(22) Date de dépôt : **19.10.83**

(54) **Polyfluorure de vinylidène possédant des propriétés au choc améliorées.**

(30) Priorité : **29.10.82 FR 8218157**

(43) Date de publication de la demande :
**09.05.84 Bulletin 84/19**

(45) Mention de la délivrance du brevet :
**21.01.87 Bulletin 87/04**

(84) Etats contractants désignés :
**AT BE CH DE FR GB IT LI LU NL SE**

(56) Documents cités :
**CHEMICAL ABSTRACTS, vol. 87, no. 26, 26 décembre 1977, page 32, no. 202587d, Columbus, Ohio, USA.**

(73) Titulaire : **ATOCHEM**
**4 & 8, Cours Michelet La Défense 10**
**F-92800 Puteaux (FR)**

(72) Inventeur : **Blaise, Jean**
**23 Quai Perrache**
**F-69002 Lyon (FR)**

(74) Mandataire : **Foiret, Claude et al**
**ATOCHEM Département Propriété Industrielle**
**F-92091 Paris la Défense 10 Cédex 42 (FR)**

**EP 0 108 006 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un polyfluorure de vinylidène (PVDF) possédant des propriétés au choc améliorées grâce à l'addition d'un plastifiant choisi parmi des phosphates organiques et des sulfonamides.

On sait que le PVDF possède un ensemble de propriétés excellentes telles que stabilité thermique, résistance aux agents chimiques, température d'utilisation élevée. Par contre, sa résistance aux chocs, particulièrement à basse température est médiocre ; l'association au PVDF d'un plastifiant du type phosphate organique ou sulfonamide permet d'améliorer très sensiblement cette propriété et cela non seulement à température ambiante, mais encore à basse température.

Les phosphates organiques qui conviennent sont de formule générale

$$OP(OR)_3$$

dans laquelle R est un reste hydrocarboné alkyle ou aryle contenant de préférence 2 à 12 atomes de carbone et mieux 3 à 10.

Le phosphate, comportant ou non des pontages éthers, est de préférence choisi parmi ceux non totalement miscibles à l'eau. A titre d'exemple, on peut citer : le phosphate de triphényle, le phosphate de tributyle, le phosphate de tributoxy éthyle ou de tributoxy éthoxy éthyle.

Les sulfonamides qui conviennent sont de formule générale

$$R—SO_2—NH—R'$$

dans laquelle R et R', identiques ou différents, sont des restes hydrocarbonés alkyle ou aryle contenant de préférence 5 à 20 atomes de carbone. Comme sulfonamides répondant à l'objet de l'invention, on peut citer par exemple : les sulfonamides dérivées d'acide p-toluènesulfonique, de laurylamine, de tridécylamine.

Le plastifiant est mélangé au PVDF en poudre dans les conditions et selon les méthodes habituelles à ces types de préparation de thermoplastique plastifié. Les quantités de plastifiant à introduire sont en pratique comprises entre 3 et 25 % en poids du mélange PVDF-plastifiant. Les valeurs ne peuvent être données qu'à titre indicatif, la valeur inférieure dépendant essentiellement de l'évolution du résultat souhaitable et la valeur supérieure dépendant de la quantité maximum absorbable de plastifiant par le PVDF sans risque d'exsudation ultérieure.

La présence du plastifiant n'exclut pas l'incorporation au mélange de charges minérale, compatibles avec la stabilité du PVDF, en particulier l'oxyde de zinc. De telles charges peuvent même être recommandées dans certains cas pour éviter dans le mélange un quelconque effet de dégradation thermique lors des moulages.

Les exemples suivants illustrent seulement l'invention.

Les essais de résistance au choc Izod entaillé ont été effectués suivant la norme ASTM D 256, chaque essai ayant porté sur au moins 10 éprouvettes.

### Exemple 1

Suivant les quantités précisées dans le tableau ci-dessous, on effectue dans un mortier un prémélange avec du phosphate de tributoxy éthyle, de l'oxyde de zinc qualité pigment, et environ la moitié du poids total à mettre en œuvre de poudre de PVDF de densité 0,4 et d'indice de fluidité de 0,5 g/10 min. obtenu avec l'appareil décrit dans la norme ASTM D 1238 à 250 °C sous 10 kg. Le prémélange est ensuite placé dans un cube mélangeur avec la quantité complémentaire de PVDF nécessaire pour atteindre la concentration souhaitée. On fait tourner le mélangeur pendant une heure.

Le mélange final est injecté ; éventuellement les éprouvettes obtenues sont broyées et injectées une seconde fois. Selon le cas, les éprouvettes sont référencées I ou II dans les tableaux ci-dessous.

Les conditions d'injection des éprouvettes sont les suivantes :

Presse ECKERT et ZIEGLER Monomat 25
Température du fluide circulant dans le moule : 90 °C
Température d'injection arrière : 250 °C
centre : 260 °C
buse : 240 °C
Pression d'injection : 70 bars
Contre pression : 40 bars

Les tableaux ci-dessous donnent les résultats des résistances au choc obtenus, à température ambiante et à —30 °C, sur des éprouvettes à différents taux de phosphate de tributoxyéthyle.

| Essai | Mélange en parties poids | | | Mise en oeuvre Nbre d'injec. | Résistance au choc IZOD en J/m | |
|---|---|---|---|---|---|---|
| | PVDF Total | Zn O | Phosphate | | + 23°C | − 30°C |
| 1 | 100 | 0 | 0 | I | 412 | 42 |
| 2 | 100 | 0 | 0 | II | 407 | 115 |
| 3 | 100 | 3 | 0 | I | 371 | 61 |
| 4 | 100 | 3 | 0 | II | 425 | 68 |
| 5 | 95 | 3 | 5 | I | 551 | 150 |
| 6 | 95 | 3 | 5 | II | 703 | 106 |
| 7 | 90 | 3 | 10 | II | 695 | 245 |
| 8 | 90 | 3 | 10 | I | 765 | 158 |
| 9 | 92,5 | 3 | 7,5 | I | 740 | 130 |
| 10 | 92,5 | 3 | 7,5 | II | 823 | 250 |

Les essais 1 à 4 sont donnés à titre comparatif.

Des essais sont effectués dans les conditions générales précédentes mais à partir d'un PVDF en poudre, de densité 0,5 et d'indice de fluidité de 10 g/10 min. Les formulations complètes et les résultats obtenus sont donnés dans le tableau ci-dessous.

| Essai | Mélange en parties poids | | | Mise en oeuvre Nbre d'injec. | Résistance au choc IZOD en J/m | |
|---|---|---|---|---|---|---|
| | PVDF Total | Zn O | Phosphate | | + 23°C | − 30°C |
| 11 | 100 | 0 | 0 | II | 260 | 80 |
| 12 | 100 | 3 | 0 | II | 138 | 37 |
| 13 | 90 | 3 | 10 | I | 810 | 172 |
| 14 | 90 | 3 | 10 | II | 713 | 147 |

Exemple 2

On reprend les conditions dans l'exemple 1 mais avec un mélange de phosphate de tributoxyéthoxy éthyle, d'oxyde de zinc et de PVDF en poudre, de densité 0,4 et de fluidité de 0,5 g/10 min.

Le phosphate de tributoxy éthoxy éthyle est préparé de la façon suivante.

Dans un réacteur agité on introduit 360 g de butyl diglycol ; on chauffe à 40° et on coule 85 g d'oxychlorure de phosphore $POCl_3$ en maintenant la température à 40 °C, puis on laisse réagir 15 minutes à 40 °C en mettant le réacteur sous pression réduite ; on chauffe ensuite à 85-90 °C en maintenant sous pression réduite pendant 2 h. On reprend à l'eau alcalinisée à NaOH ; on extrait le phosphate de tributoxy éthoxy éthyle du milieu au tétrachlorure de carbone que l'on élimine ensuite sous vide à 80 °C.

Les formulations complètes et les résultats obtenus sont donnés dans le tableau ci-dessous.

| Essai | Mélange en parties poids | | | Mise en oeuvre Nbre d'injec. | Résistance au choc IZOD en J/m | |
|---|---|---|---|---|---|---|
| | PVDF Total | Zn O | Phosphate | | + 23°C | − 30°C |
| 1 | 90 | 3 | 10 | I | 642 | 169 |
| 2 | 90 | 3 | 10 | II | 772 | 180 |

Exemple 3

On reprend les conditions de l'exemple 1 mais avec un mélange de paratoluène sulfonamide dérivé de laurylamine, éventuellement d'oxyde de zinc et de PVDF de densité 0,4 et d'indice de fluidité 0,5 g/10 min.

Les formulations complètes et les résultats obtenus sont donnés dans le tableau ci-dessous.

| | Mélange en parties poids | | | Mise en oeuvre | Résistance au choc IZOD en J/m | |
|---|---|---|---|---|---|---|
| Essai | PVDF Total | Zn O | Sulfonamide | Nbre d'injec. | + 23°C | − 30°C |
| 1 | 100 | 0 | 0 | I | 412 | 42 |
| 2 | 100 | 0 | 0 | II | 407 | 115 |
| 3 | 100 | 3 | 0 | I | 371 | 61 |
| 4 | 100 | 3 | 0 | II | 425 | 68 |
| 5 | 90 | 0 | 10 | I | 755 | 124 |
| 6 | 90 | 0 | 10 | II | 893 | 147 |
| 7 | 90 | 3 | 10 | I | 785 | 140 |
| 8 | 90 | 3 | 10 | II | 948 | 168 |

Les exemples 1 à 4 sont donnés à titre comparatif.

Pour mémoire, le sulfonamide est préparé comme ci-après.

Dans un réacteur agité muni d'un réfrigérant, on introduit : 370,8 g de laurylamine, 457,7 g de chlorure de paratoluène sulfonyle, 254,4 g de carbonate de sodium, 3 000 g d'eau. Les réactifs sont chauffés, sous agitation, à 80 °C et maintenus agités 2 heures à cette température. Après soutirage, on décante la phase aqueuse. La phase organique est reprise par le chloroforme et lavée à l'eau jusqu'à neutralité. On sèche sous pression réduite à 90 °C jusqu'à poids constant.

Un autre essai a été effectué dans les mêmes conditions avec un PVDF de densité 0,5 et d'indice de fluidité de 0,5 g/10 min.

La formulation complète et les résultats obtenus sont donnés ci-dessous.

| | Mélange en parties poids | | Mise en oeuvre | Résistance au choc IZOD en J/m | |
|---|---|---|---|---|---|
| Essai | PVDF Total | Sulfonamide | Nbre d'injec. | + 23°C | − 30°C |
| 9 | 100 | 0 | II | 260 | 60 |
| 10 | 90 | 10 | II | 792 | 106 |

L'essai 9 est donné à titre comparatif.

Exemple 4

On reprend les conditions de l'exemple 1, mais avec un mélange de paratoluène sulfonamide dérivé de tridécylamine, éventuellement d'oxyde de zinc et de PVDF de densité 0,4 et d'indice de fluidité 0,5 g/10 min.

Les formulations complètes et les résultats obtenus sont donnés dans le tableau ci-après.

(Voir tableau page 5)

| | Mélange en parties poids | | | Mise en oeuvre Nbre d'injec. | Résistance au choc IZOD en J/m | |
|---|---|---|---|---|---|---|
| Essai | PVDF Total | Zn O | Sulfonamide | | + 23°C | − 30°C |
| 1 | 95 | 0 | 5 | I | 676 | 117 |
| 2 | 95 | 0 | 5 | II | 714 | 127 |
| 3 | 90 | 0 | 10 | I | 876 | 146 |
| 4 | 90 | 0 | 10 | II | 976 | 160 |
| 5 | 85 | 0 | 15 | I | 951 | 171 |
| 6 | 85 | 0 | 15 | II | 996 | 200 |
| 7 | 90 | 3 | 10 | I | 899 | 159 |
| 8 | 90 | 3 | 10 | II | 1012 | 182 |

Pour mémoire, le sulfonamide est préparé comme ci-après.

Dans un réacteur agité muni d'un réfrigérant, on introduit 80 g de tridécylamine, 91,5 g de chlorure de paratoluène sulfonyle, 102 g de carbonate de sodium, 600 g d'eau. L'ensemble agité est porté à 80 °C et maintenu sous agitation 1 heure à cette température. Après soutirage, on décante la phase aqueuse. La phase organique est reprise dans son volume de chloroforme, puis lavée à l'eau jusqu'à neutralité. On sèche sous pression réduite à 90 °C jusqu'à poids constant.

Un autre essai a été effectué dans les mêmes conditions avec un PVDF de densité 0,5 et d'indice de fluidité de 10 g/10 min.

La formulation complète et les résultats obtenus sont donnés ci-dessous.

| | Mélange en parties poids | | Mise en oeuvre Nbre d'injec. | Résistance au choc IZOD en J/m | |
|---|---|---|---|---|---|
| Essai | PVDF Total | Sulfonamide | | + 23°C | − 30°C |
| 9 | 90 | 10 | II | 802 | 135 |

## Exemple 5

On reprend les conditions de l'exemple 1 mais avec un mélange de phosphate de triphényle, de PVDF en poudre et éventuellement d'oxyde de zinc.

Le PVDF choisi possède une densité de 0,4 et une fluidité de 0,5 g/10 min.

Les formulations complètes et les résultats obtenus sont donnés dans le tableau suivant :

| | Mélange en parties poids | | | Mise en oeuvre Nbre d'injec. | Résistance au choc IZOD en J/m | |
|---|---|---|---|---|---|---|
| Essai | PVDF Total | Zn O | Phosphate | | + 23°C | − 30°C |
| 1 | 100 | 3 | 0 | II | 425 | 68 |
| 2 | 90 | 3 | 10 | II | 609 | 68 |
| 3 | 80 | 0 | 20 | II | 594 | 104 |

L'essai 1 rappelle à titre comparatif l'essai 4 de l'exemple 1.

## Exemple 6

On reprend les conditions de l'exemple 1, mais avec un mélange de phosphate de tributyle, d'oxyde

de zinc et de PVDF en poudre, de densité 0,4 et de fluidité 0,5 g/10 min.

Les formulations complètes et les résultats obtenus sont donnés dans le tableau ci-dessous.

| Essai | Mélange en parties poids | | | Mise en oeuvre Nbre d'injec. | Résistance au choc IZOD en J/m | |
|---|---|---|---|---|---|---|
| | PVDF Total | Zn O | Phosphate | | + 23 °C | − 30 °C |
| 1 | 90 | 3 | 10 | II | 674 | 143 |
| 2 | 80 | 3 | 20 | II | 610 | 386 |

**Revendications**

1. Polyfluorure de vinylidène possédant des propriétés au choc améliorées caractérisé en ce qu'on lui additionne un plastifiant choisi parmi les phosphates organiques et les sulfonamides de formules générales respectives

$$OP(OR)_3$$

et

$$R{-}SO_2NH\ R'$$

dans lesquels R et R' identiques ou différents, sont des restes hydrocarbonés alkyles ou aryles contenant au plus 12 atomes de carbone pour le phosphate et au plus 20 atomes de carbone pour le sulfonamide.

2. Polyfluorure de vinylidène selon la revendication 1 caractérisé en ce qu'il contient un phosphate organique dont le reste alkyle ou aryle contient de 2 à 12 atomes de carbone.

3. Polyfluorure de vinylidène selon l'une des revendications 1 à 2 caractérisé en ce que le phosphate organique contient des fonctions éthers.

4. Polyfluorure de vinylidène selon la revendication 1 caractérisé en ce qu'il contient un sulfonamide dont les restes alkyle ou aryle contiennent de 5 à 20 atomes de carbone.

5. Polyfluorure de vinylidène selon l'une des revendications 1 à 4 caractérisé en ce qu'il contient 3 à 25 % en poids de plastifiant par rapport au mélange polyfluorure de vinylidène-plastifiant.

6. Polyfluorure de vinylidène selon l'une des revendications 1 à 5 caractérisé en ce qu'il contient une charge minérale.

**Claims**

1. Polyvinylidene fluoride possessing improved impact properties, characterized in that a plasticizer is added thereto chosen from organic phosphates and sulphonamides of respective general formulae

$$OP(OR)_3$$

and

$$R{-}SO_2NH\ R'$$

in which R and R', which may be identical or different, are alkyl or aryl hydrocarbon residues containing at most 12 carbon atoms for the phosphate and at most 20 carbon atoms for the sulphonamide.

2. Polyvinylidene fluoride according Claim 1, characterized in that it contains an organic phosphate in which the alkyl or aryl residue contains from 2 to 12 carbon atoms.

3. Polyvinylidene fluoride according to one of Claims 1 to 2, characterized in that the organic phosphate contains ether groups.

4. Polyvinylidene fluoride according to Claim 1, characterized in that it contains a sulphonamide in which the alkyl or aryl residues contain from 5 to 20 carbon atoms.

5. Polyvinylidene fluoride according to one of Claims 1 to 4, characterized in that it contains 3 to 25 % by weight of plasticizer relative to the polyvinylidene fluoride/plasticizer mixture.

6. Polyvinylidene fluoride according to one of Claims 1 to 5, characterized in that it contains an inorganic filler.

**Patentansprüche**

1. Polyvinylidenfluorid mit verbesserten Schlageigenschaften, gekennzeichnet durch Zusatz eines

Weichmachers, der unter den organischen Phosphaten und den Sulfonamiden der allgemeinen Formeln

$$OP(OR)_3$$

und

$$R—SO_2NH\ R'$$

ausgewählt ist, in denen R und R', die gleich oder verschieden sein können, Alkyl- oder Arylgruppen mit höchstens 12 Kohlenstoffatomen bei dem Phosphat und höchstens 20 Kohlenstoffatomen bei dem Sulfonamid sind.

2. Polyvinylidenfluorid nach Anspruch 1, dadurch gekennzeichnet, daß es ein organisches Phosphat enthält, bei dem der Alkyl- oder Arylrest 2 bis 12 Kohlenstoffatome umfasst.

3. Polyvinylidenfluorid nach Anspruch 1 oder 2, dadurch gekennzeichnet, daß das organische Phosphat Ätherfunktionen enthält.

4. Polyvinylidenfluorid nach Anspruch 1, dadurch gekennzeichnet, daß es ein Sulfonamid enthält, dessen Alkyl- oder Arylreste 5 bis 20 Kohlenstoffatome umfassen.

5. Polyvinylidenfluorid nach einem der Ansprüche 1 bis 4, dadurch gekennzeichnet, daß es 3 bis 25 Gew.% Weichmacher, bezogen auf die Polyvinylidenfluorid-Weichmacher-Mischung, enthält.

6. Polyvinylidenfluorid nach einem der Ansprüche 1 bis 5, dadurch gekennzeichnet, daß es einen mineralischen Zuschlag enthält.